# FASCICULE DE BREVET EUROPEEN

(11) **EP 4 395 528 B1**
(45) Date de publication et mention de la délivrance du brevet: **29.10.2025**
(21) Numéro de dépôt: 22762099.4
(22) Date de dépôt: 12.08.2022
(51) Int. Cl.: A01G 9/24, A01G 7/00, H02S 20/32, A01G 22/05, A01G 17/02

(54) **PROCEDE D'ECLAIRCISSAGE EN AGRICULTURE**
LANDWIRTSCHAFTLICHES AUSDÜNNUNGSVERFAHREN
AGRICULTURAL THINNING METHOD

(30) Priorité: 30.08.2021 FR 2109023
(43) Date de publication de la demande: 10.07.2024
(73) Titulaire: Sun'Agri, 75017 Paris (FR)
(72) Inventeur: VALLE, Benoît, 69380 Chazay d'Azergues (FR); GARCIN, Jean, 93100 Montreuil (FR); LOEPER, Pauline, 69005 LYON (FR); FORTIN, Perrine, 69005 LYON (FR)
(74) Mandataire: Ipsilon
(86) Numéro de dépôt international: PCT/EP2022/072637
(87) Numéro de publication internationale: WO 2023/030864

(56) Documents cités:
- FR-A1- 3 019 274
- KOCKEROLS KATHARINA ET AL: "Eclaircissage des pommes par ombrage des arbres", REVUE SUISSE VITICULTURE, ARBORICULTURE, HORTICULTURE, 1 January 2010 (2010-01-01), pages 386 - 389, XP055922853, Retrieved from the Internet <URL:https://www.revuevitiarbohorti.ch/wp-content/uploads/2010_06_f_210.pdf> [retrieved on 20220518]

## Description

### Domaine technique

La présente invention concerne l'éclaircissage en agriculture.

### Technique antérieure

L'éclaircissage consiste à réduire le nombre de plants d'un semis, de fleurs ou de fruits d'un arbre pour favoriser la croissance des autres. L'objectif est par exemple de contrôler la charge d'un arbre afin de s'assurer d'un nombre limité de fruits. Les arbres donneront ainsi chaque année des fruits dépassant le calibre minimum de commercialisation, on limitera les hétérogénéités annuelles de production i.e. l'alternance de production, on réduira les maladies en espaçant les fruits et on diminuera le risque de casse de branches par excès de fruit.

Dans l'agriculture conventionnelle, il est courant de recourir à un éclaircissage chimique (post-floral) s'appuyant sur des produits phytosanitaires. Ce type d'éclaircissage requiert des conditions météorologiques idéales pour une bonne application du produit et une efficacité maximale. L'effet est rapide, nécessitant d'appliquer le produit avec le bon dosage au bon stade cultural (fenêtre de temps réduite) pour faire tomber les fruits les moins robustes.

Dans l'agriculture biologique, il est courant de recourir à un éclaircissage mécanique, pré-floral ou post-floral, généralement sans utilisation de produit phytosanitaire.

Il a été proposé de recourir à un éclaircissage par ombrage, en couvrant entièrement les arbres de toiles d'ombrage à peu près opaques pendant un intervalle de temps déterminé afin de stimuler l'abscission des fruits ou des fleurs. En réduisant ainsi de manière importante (jusqu'à 80%) la ressource lumineuse, la photosynthèse de la culture est impactée, limitant l'acquisition de ressources carbonées et donc la capacité à alimenter suffisamment tous les fruits de l'arbre. La pose des toiles d'ombrage est toutefois relativement complexe et coûteuse. La publication « Eclaircissage des pommes par ombrage des arbres I. Efficacité de l'éclaircissage » Katharina KOCKEROLS, Albert WIDMER, Michael GÖLLES et Esther BRA VIN, Agroscope Changins-Wädenswil ACW, 8820 Wädenswil présente des résultats obtenus par une telle méthode.

La publication "Efficiency of fruitlet thinning in apple 'Gala Must' by use of Metamitron and artificial shading" Alina BASAK, Journal of Fruit and Ornamental Plant Research Vol. 19(1) 2011: 51-62 décrit une méthode d'éclaircissage de pommes combinant l'utilisation du métamitron inhibiteur de la photosynthèse et l'utilisation d'un ombrage artificiel temporaire. La publication "Net Photosynthesis, Specific Leaf Weight, and Flowering of Peach as Influenced by Shade", Richard P. MARINI and Donald L. SOWERS, Department of Horticulture, Virginia Polytechnic Institute and State University, Blacksburg, VA 24061 divulgue que la quantité de fleurs des pêchers est linéairement impactée par le pourcentage d'ombrage l'année passée pendant l'initiation florale, de juin à juillet, sans impact après le 30 juillet.

Les publications "Isolation and Characterization of genes associated with shade-induced apple abscission", Chunjiang ZHOU, Alan N. LAKSO, Terence L. ROBINSON and Susheng GAN, Mol Genet Genomics (2008) 280:83-92 et "Individual and combined effects of shading and thinning chemicals on abscission and dry-matter accumulation of 'Royal Gala' apple fruit", S. MCARTNEY, M. WHITE, I. LATTER and J. CAMPBELL, The Horticulture and Food Research Institute of New Zealand Ltd., Hawke's Bay Research Centre, Private Bag 1401, Havelock North, New Zealand, Journal of Horticultural Science & Biotechnology (2004) 79 (3) 441-448 rapportent des études sur les effets de l'éclaircissage des pommes par ombrage et/ou éclaircissage chimique, notamment sur la production des pommes.

Par ailleurs, il existe des modèles agronomiques de croissance des plantes tels que Malusim (https://malusim.org/) qui permettent d'affiner la détection du moment où appliquer les produits chimiques d'éclaircissage.

### Exposé de l'invention

Il existe un besoin pour perfectionner encore les méthodes d'éclaircissage par ombrage afin notamment d'en réduire le coût et faciliter leur mise en œuvre.

L'invention vise à répondre à cet objectif et a pour objet, selon l'un de ses aspects, un procédé d'éclaircissage de fruits et/ou fleurs appartenant à des végétaux situés sous des capteurs photovoltaïques orientables, l'ombre solaire projetée sur les végétaux étant modifiée par le changement d'orientation des capteurs, procédé dans lequel on maintient grâce à l'orientation des capteurs les végétaux à l'ombre pendant une durée suffisante pour induire un éclaircissage par ombrage de ceux-ci.

De façon surprenante, il a été constaté que les capteurs photovoltaïques permettent de réaliser un éclaircissage par ombrage significatif malgré le fait qu'ils n'apportent pas une obscurité comparable aux toiles d'ombrage opaques telle qu'utilisées dans l'article KOCKEROLS et al précité.

L'invention permet ainsi de profiter de la présence de capteurs photovoltaïques pour réaliser un éclaircissage par ombrage, et donc d'obtenir un éclaircissage sans avoir à effectuer la pose de toiles d'ombrage ou à appliquer de produits phytosanitaires. De plus, les capteurs étant déjà en place au-dessus des végétaux, il devient facile d'appliquer l'ombre au meilleur moment après la floraison et juste pendant la durée nécessaire, sans être soumis à des aléas climatiques durant la pose ou à un besoin de main d'œuvre pour la pose et la dépose des toiles d'ombrage.

L'invention permet de plus d'automatiser facilement le procédé d'éclaircissage par ombrage en pilotant les capteurs photovoltaïques informatiquement, alors que dans l'art antérieur, l'éclaircissage est une opération manuelle habituellement réalisée par l'exploitant agricole. Grâce à l'invention, l'éclaircissage peut être contrôlé, et arrêté à tout moment en modifiant par exemple le pilotage des capteurs photovoltaïques dès que l'on détecte que l'objectif d'ombrage est atteint, contrairement à un éclaircissage chimique où le produit agit en une seule fois et où l'on ne peut interrompre son action une fois qu'il a été appliqué.

Une fois que l'ombrage visant à atteindre l'éclaircissage recherché a été apporté, le procédé peut comporter ensuite une phase où pendant une période donnée on cherche au contraire à maximiser la lumière apportée aux végétaux en pilotant les capteurs pour minimiser l'ombrage, afin par exemple de favoriser la croissance des fruits restants.

L'invention permet de réduire l'Indice de Fréquence de Traitement (IFT), en employant un levier non phytosanitaire pour l'opération culturale de l'éclaircissage.

L'éclaircissage selon l'invention peut en outre être mis en œuvre quelles que soient les conditions météorologiques, hormis en cas d'absence de rayonnement direct lors de la période culturale ciblée. L'invention permet de contrôler l'ombrage apporté plus facilement pour l'adapter aux conditions climatiques en temps réel.

Dans un mode de réalisation, l'orientation des capteurs photovoltaïques est pilotée informatiquement de façon automatique pour réaliser l'action d'éclaircissage, notamment à partir au moins de données représentatives du nombre de fruits et/ou fleurs présents et/ou à éliminer et/ou de l'état de la floraison ou de la fructification. Ces données peuvent être obtenues par exemple par analyse d'images automatique, les images provenant d'une ou plusieurs caméras permettant d'observer les végétaux.

De préférence, l'ombrage apporté aux végétaux durant l'éclaircissage est régulé au moins selon la variété du végétal, les conditions météorologiques, la charge initiale du végétal et les objectifs de production, notamment les classes de calibres des fruits, le rendement et/ou la qualité des fruits.

Dans un mode de réalisation, on cause l'abscission recherchée tout en cherchant à atteindre un optimum maximisant le plus possible la production d'énergie électrique par rapport à une référence sans combinaison avec les végétaux.

Le procédé d'éclaircissage selon l'invention peut s'effectuer en complément d'un éclaircissage mécanique et/ou chimique. Il est possible que le procédé d'éclaircissage selon l'invention complète par exemple un éclaircissage mécanique qui a lieu sur des stades phénologiques plus précoces (au niveau des fleurs) en agissant sur les fruits présents en excès par rapport aux objectifs du producteur.

Les capteurs photovoltaïques peuvent être orientés pendant ladite durée de manière à générer le plus d'ombre possible sur les végétaux à éclaircir. Ceci est notamment utile lorsqu'on vise à éliminer un maximum de fruits ou de fleurs.

Comme mentionné plus haut, au moins une caméra est préférentiellement utilisée pour acquérir des images des végétaux, une unité de traitement d'informations déterminant automatiquement à partir de ces images le moment opportun d'application de l'ombrage.

Une application pour téléphone mobile ou appareil photographique peut être utilisée par un exploitant agricole pour informer un logiciel de commande de l'état de floraison et/ou de fructification des végétaux, permettant de déterminer automatiquement à partir de ces informations le moment opportun d'application de l'ombrage. Cette application permet à l'utilisateur de décrire qualitativement (stade phénologique) et quantitativement (nombre de fleurs et/ou de fruits) le végétal et de donner des indications sur la quantité de fruits et/ou de fleurs à éclaircir.

Cette application mobile peut optionnellement utiliser des données de géolocalisation, de telle sorte que l'information de géolocalisation est utilisée pour commander les capteurs photovoltaïques. L'application peut être configurée pour géolocaliser automatiquement le téléphone ou l'appareil photographique. De préférence, on renseigne sur l'état de floraison et/ou de fructification des végétaux alors que le téléphone se trouve à proximité de ces végétaux, de manière à permettre de géolocaliser les végétaux dont on renseigne l'état.

Dans une variante, l'application mobile permet à l'exploitant de photographier le végétal afin que l'image puisse être post-traitée pour déterminer automatiquement l'état de floraison et/ou de fructification. La photographie du végétal peut être géolocalisée afin de permettre une commande des capteurs photovoltaïques en fonction de l'information de géolocalisation. De préférence, on prend au moins une photographie des végétaux avec le téléphone mobile ou l'appareil photographique, et cette photographie est analysée automatiquement pour en déduire au moins une information concernant l'état de floraison et/ou de fructification, la photographie étant de préférence géolocalisée.

L'utilisation de la caméra et/ou de l'application pour téléphone mobile ou appareil photographique permet d'automatiser le procédé d'éclaircissage et de gagner en précision.

Dans une variante, un modèle agronomique de croissance des plantes est utilisé pour déterminer le moment où appliquer l'ombrage afin d'obtenir l'éclaircissage voulu. L'ombrage peut être déclenché après la pleine floraison.

Dans un mode de réalisation, les capteurs photovoltaïques sont positionnés sur une structure porteuse à une hauteur adéquate par rapport aux végétaux de sorte à permettre un ombrage de ceux-ci à une portée maximale.

De préférence, la hauteur de la structure porteuse est réglable. Ceci permet d'ajuster la portée de l'ombre désirée.

Les végétaux peuvent être choisis parmi les arbres fruitiers, notamment les pommiers, poiriers, pruniers, abricotiers, figuiers, actinidias, cerisiers et pêchers, et plus généralement tous arbres fruitiers à pépins et à noyaux.

L'invention peut être mise en œuvre pour diminuer le nombre de fruits d'au moins 10% par rapport à une référence sans ombrage, mieux d'au moins 20%.

L'invention a encore pour objet un procédé de culture de fruits sous capteurs photovoltaïques orientables, le nombre de fruits ou de fleurs sur les végétaux dépassant une limite prédéfinie préjudiciable à la qualité recherchée pour les fruits dans lequel on réalise, , un éclaircissage par la mise en œuvre du procédé d'éclaircissage selon l'invention, tel que défini plus haut.

### Brève description des dessins

L'invention pourra être mieux comprise à la lecture de la description détaillée qui va suivre, d'exemples non limitatifs de mise en œuvre de celle-ci, et à l'examen du dessin annexé, sur lequel :
[Fig 1] La figure 1 représente de façon schématique un système de commande de l'orientation d'un capteur photovoltaïque selon l'invention ;
[Fig 2] La figure 2 est une vue schématique d'un système de production d'énergie électrique comportant des capteurs photovoltaïques permettant la mise en œuvre du procédé d'éclaircissage par ombrage selon l'invention ; et
[Fig 3] la figure 3 est une vue analogue à la figure 2 illustrant la modification de l'orientation de capteurs photovoltaïques en vue d'atteindre un objectif d' éclaircissage différent.

### Description détaillée

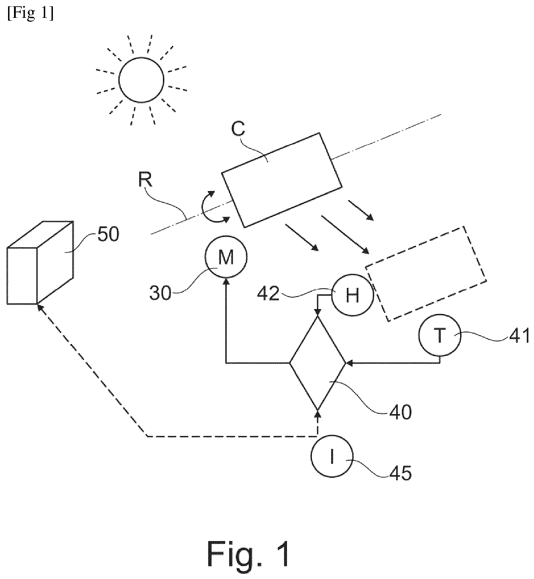

On a illustré schématiquement à la figure 1 un capteur photovoltaïque C mobile autour d'un axe de rotation R. Le capteur photovoltaïque C est pivoté autour de l'axe R à l'aide d'au moins un actuateur 30. Par exemple, il est prévu individuellement pour chaque capteur photovoltaïque C un actuateur 30. En variante, un même actuateur 30 peut déplacer en rotation une pluralité de capteurs photovoltaïques C.

Les actuateurs 30 comportent par exemple chacun un ou plusieurs moteurs électriques, et sont constitués par exemple par des servomoteurs.

La position à donner au capteur photovoltaïque C peut être déterminée par un calculateur local 40 qui est relié via toute interface de puissance adaptée à l'actuateur 30.

Le calculateur 40 reçoit de préférence des informations d'une ou plusieurs sondes locales, par exemple une sonde de température 41 et une sonde d'hygrométrie 42. D'autres sondes peuvent être ajoutées pour scruter les conditions météorologiques, tels qu'un pluviomètre, anémomètre, et/ou une caméra 45 pour acquérir des images et visualiser l'état de développement du végétal, sa charge initiale, le nombre de fleurs et/ou fruits présents, et

Le calculateur 40 peut également échanger des données, par exemple via un réseau de téléphonie sans fil, avec un serveur distant 50, lequel peut par exemple informer le calculateur 40 de la météo à venir et/ou comprendre une unité de traitement d'informations déterminant automatiquement à partir des images acquises par la caméra 45 le moment opportun d'application de l'ombrage.

Le calculateur 40 peut être réalisé à partir de tout micro-ordinateur ou équipement informatique permettant de piloter l'orientation des capteurs photovoltaïques C en fonction d'une ou plusieurs lois de commande donnant l'orientation à imposer aux capteurs photovoltaïques en fonction de données représentatives du nombre de fruits et/ou fleurs présents et/ou à éliminer et/ou de l'état de la floraison ou de la fructification. L'orientation à imposer aux capteurs photovoltaïques C peut aussi être commandée selon la variété du végétal, les conditions météorologiques, la charge initiale du végétal et les objectifs de production, notamment les classes de calibres des fruits, le rendement et/ou la qualité des fruits.

Le calculateur 40 peut ainsi comporter une unité de calcul et une mémoire locale dans laquelle peuvent être enregistrées des données locales relatives aux végétaux et/ou à leur environnement.

La mémoire du calculateur peut également comporter des paramètres d'asservissement qui régissent l'orientation des capteurs photovoltaïques C en fonction des objectifs de production. Ces paramètres peuvent évoluer dans le temps et, en fonction par exemple de la saison, et privilégier l'éclaircissage par ombrage ou non des végétaux.

La ou les lois de commande peuvent être initialement programmées dans le calculateur 40, ou en variante être téléchargées par le calculateur 40 à partir du serveur distant 50, ou encore être réactualisées périodiquement par le serveur distant 50.

Dans un exemple de réalisation, le calculateur 40 présente un fonctionnement autonome. En fonction de la saison, de la date de semis, du nombre de fruits et/ou fleurs présents et/ou à éliminer et/ou de l'état de la floraison ou de la fructification, et éventuellement d'autres paramètres renseignés par l'agriculteur, il pilote automatiquement et de façon journalière ou avec une autre périodicité l'orientation des capteurs photovoltaïques C de façon à atteindre l'objectif d'éclaircissage par ombrage sur une période donnée. Lorsque le procédé d'éclaircissage est mis en œuvre, les capteurs photovoltaïques C sont par exemple orientés pendant plusieurs jours pour empêcher le plus possible la lumière de passer, générant le plus d'ombre possible sur les végétaux et maximisant par ailleurs la production électrique. Puis, une fois l'abscission recherchée obtenue, les capteurs photovoltaïques C sont par exemple amenés en activant les actuateurs 30 dans une orientation visant à laisser passer le maximum de lumière, au détriment de la production électrique, pendant une période donnée, pour permettre aux végétaux de rattraper le retard de photosynthèse et de poursuivre leur développement.

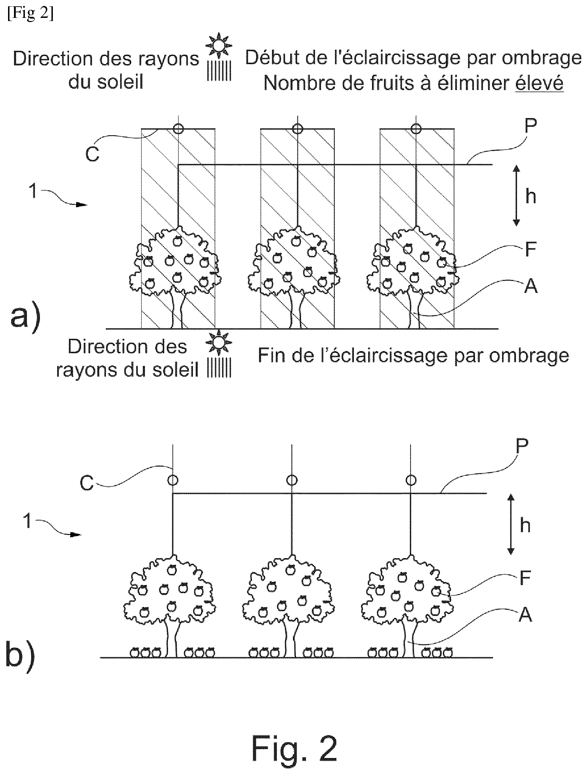

On a illustré schématiquement à la figure 2 un système de production d'énergie électrique 1, comportant une structure porteuse P et des capteurs photovoltaïques orientables C maintenus à distance non nulle du sol par la structure porteuse P, et à une hauteur h d'arbres fruitiers A, par exemple des pommiers, situés sous les capteurs C. L'ombre solaire projetée sur les végétaux est modifiée par le changement d'orientation des capteurs C.

Les figures 2 a) et 2 b) représentent respectivement le début et la fin du procédé d'éclaircissage par ombrage, avec pour objectif l'abscission d'un nombre élevé de fruits F. On voit sur la figure 2 a) que les capteurs C sont orientés selon une direction perpendiculaire à celle des rayons du soleil, projetant ainsi le maximum d'ombre sur les arbres A. La figure 2 b) représente la fin de l'éclaircissage où les capteurs sont orientés selon la direction des rayons solaires pour minimiser l'ombre portée.

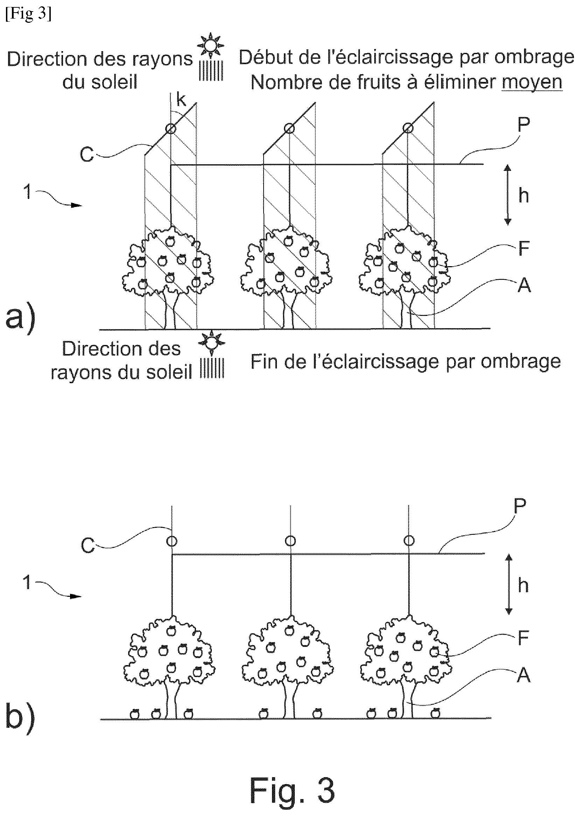

La figure 3 est similaire à la figure 2, avec pour objectif d'éliminer moins de fruits F. Pour ce faire, au début de l'opération d'éclaircissage, les capteurs C forment un angle k avec la direction d'incidence des rayons du soleil, comme illustré sur la figure 3 a), projetant ainsi moins d'ombre sur les arbres A que dans la situation précédente. On voit sur la figure 3 b) qu'à la fin de l'éclaircissage, moins de fruits sont éliminés, en comparaison avec la situation de la figure 2. Le procédé peut faire appel à des tables renseignant sur le degré d'ombrage à apporter en fonction du résultat recherché, de la variété et du stade de développement des fruits ou fleurs, par exemple. Ces tables peuvent être mémorisées et accessibles par le calculateur 40 qui pilote les capteurs C.

L'invention est définie par les revendications qui suivent. Il est envisageable que l'éclaircissage par ombrage comme décrit ci-dessus soit mis en œuvre conjointement à une autre technique d'éclaircissage, par exemple par application d'un produit.

## Revendications

1. Procédé d'éclaircissage de fruits (F) et/ou fleurs appartenant à des végétaux (A) **caractérisé en ce que** les végétaux (A) sont situés sous des capteurs photovoltaïques orientables (C), l'ombre solaire projetée sur les végétaux étant modifiée par le changement d'orientation des capteurs, procédé dans lequel on maintient grâce à l'orientation des capteurs les végétaux à l'ombre pendant une durée suffisante pour induire un éclaircissage par ombrage de ceux-ci.

2. Procédé selon la revendication précédente, l'orientation des capteurs photovoltaïques (C) étant pilotée informatiquement de façon automatique pour réaliser l'action d'éclaircissage, notamment à partir au moins de données représentatives du nombre de fruits (F) et/ou fleurs présents et/ou à éliminer et/ou de l'état de la floraison ou de la fructification.

3. Procédé l'une des deux revendications précédentes, l'ombrage apporté aux végétaux (A) durant l'éclaircissage étant régulé au moins selon la variété du végétal, les conditions météorologiques, la charge initiale du végétal et les objectifs de production, notamment les classes de calibres des fruits (F), le rendement et/ou la qualité des fruits.

4. Procédé selon l'une quelconque des revendications précédentes, dans lequel on cause l'abscission recherchée tout en cherchant à atteindre un optimum maximisant le plus possible la production d'énergie électrique par rapport à une référence sans combinaison avec les végétaux (A).

5. Procédé selon l'une quelconque des revendications précédentes, s'effectuant en complément d'un éclaircissage mécanique et/ou chimique.

6. Procédé selon l'une quelconque des revendications précédentes, les capteurs photovoltaïques (C) étant orientés pendant ladite durée de manière à générer le plus d'ombre possible sur les végétaux (A) à éclaircir.

7. Procédé selon l'une quelconque des revendications précédentes, au moins une caméra (45) étant utilisée pour acquérir des images des végétaux (A), une unité de traitement d'informations déterminant automatiquement à partir de ces images le moment opportun d'application de l'ombrage.

8. Procédé selon l'une quelconque des revendications précédentes, une application pour téléphone mobile ou appareil photographique étant utilisée par un exploitant agricole pour informer un logiciel de commande de l'état de floraison et/ou de fructification des végétaux.

9. Procédé selon la revendication 8, dans lequel l'application est configurée pour géolocaliser automatiquement le téléphone ou l'appareil photographique, et dans lequel on renseigne sur l'état de floraison et/ou de fructification des végétaux alors que le téléphone se trouve à proximité de ces végétaux, de manière à permettre de géolocaliser les végétaux dont on renseigne l'état.

10. Procédé selon l'une des revendications 8 et 9, dans lequel on prend au moins une photographie des végétaux avec le téléphone mobile ou l'appareil photographique, et dans lequel cette photographie est analysée automatiquement pour en déduire au moins une information concernant l'état de floraison et/ou de fructification, la photographie étant de préférence géolocalisée.

11. Procédé selon l'une quelconque des revendications précédentes, l'ombrage étant déclenché après la pleine floraison.

12. Procédé selon l'une quelconque des revendications précédentes, un modèle agronomique de croissance des plantes étant utilisé pour déterminer le moment où appliquer l'ombrage.

13. Procédé selon l'une quelconque des revendications précédentes, les capteurs photovoltaïques (C) étant positionnés sur une structure porteuse (P) à une hauteur (h) adéquate par rapport aux végétaux (A) de sorte à permettre un ombrage de ceux-ci à une portée maximale, la hauteur (h) de la structure porteuse (P) étant notamment réglable.

14. Procédé selon l'une quelconque des revendications précédentes, les végétaux (A) étant choisis parmi les arbres fruitiers, notamment les arbres fruitiers à pépins et à noyaux, en particulier les pommiers, poiriers, pruniers, abricotiers, figuiers, actinidias, cerisiers et pêchers.

15. Procédé de culture de fruits sous capteurs photovoltaïques orientables, le nombre de fruits ou de fleurs sur les végétaux dépassant une limite prédéfinie préjudiciable à la qualité recherchée pour les fruits, dans lequel on réalise, , un éclaircissage par la mise en œuvre du procédé d'éclaircissage selon l'une quelconque des revendications 1 à 14.

## Patentansprüche

1. Verfahren zur Ausdünnung von Früchten (F) und/oder Blüten, die zu Gewächsen (A) gehören, **dadurch gekennzeichnet, dass** sich die Gewächse (A) unter ausrichtbaren Photovoltaikmodulen (C) befinden, wobei der auf die Gewächse geworfene Sonnenschatten durch eine Änderung der Ausrichtung der Module modifiziert wird, wobei bei dem Verfahren dank der Ausrichtung der Module die Gewächse für eine Dauer im Schatten gehalten werden, die ausreicht, um eine Ausdünnung durch Beschattung derselben zu bewirken.

2. Verfahren nach dem vorhergehenden Anspruch, wobei die Ausrichtung der Photovoltaikmodule (C) automatisch auf elektronische Weise angesteuert wird, um den Vorgang der Ausdünnung durchzuführen, insbesondere mindestens auf der Grundlage von Daten, die für die Anzahl von Früchten (F) und/oder Blüten, die vorhanden sind und/oder entfernt werden sollen, und/oder für den Blüte- oder Fruchtbildungszustand repräsentativ sind.

3. Verfahren nach einem der zwei vorhergehenden Ansprüche, wobei der während der Ausdünnung für die Gewächse (A) bereitgestellte Schatten mindestens in Abhängigkeit von der Sorte des Gewächses, den Witterungsbedingungen, dem Fruchtansatz des Gewächses und den Produktionszielen, insbesondere den Größenklassen der Früchte (F), dem Ertrag und/oder der Qualität der Früchte, geregelt wird.

4. Verfahren nach einem der vorhergehenden Ansprüche, wobei die gewünschte Abszission herbeigeführt wird, während gleichzeitig versucht wird, ein Optimum zu erreichen, das die Produktion elektrischer Energie bezogen auf eine Referenz ohne Kombination mit den Gewächsen (A) so weit wie möglich maximiert.

5. Verfahren nach einem der vorhergehenden Ansprüche, das zusätzlich zu einer mechanischen und/oder chemischen Ausdünnung erfolgt.

6. Verfahren nach einem der vorhergehenden Ansprüche, wobei die Photovoltaikmodule (C) während der Dauer so ausgerichtet werden, dass sie so viel Schatten wie möglich für die auszudünnenden Gewächse (A) erzeugen.

7. Verfahren nach einem der vorhergehenden Ansprüche, wobei mindestens eine Kamera (45) verwendet wird, um Bilder der Gewächse (A) zu erfassen, wobei eine Informationsverarbeitungseinheit anhand dieser Bilder automatisch den passenden Moment für das Anwenden der Beschattung bestimmt.

8. Verfahren nach einem der vorhergehenden Ansprüche, wobei eine App für ein Mobiltelefon oder einen Fotoapparat von einem Landwirt verwendet wird, um eine Steuersoftware über den Blüte- und/oder Fruchtbildungszustand der Gewächse zu informieren.

9. Verfahren nach Anspruch 8, wobei die App dazu konfiguriert ist, das Telefon oder den Fotoapparat automatisch zu geolokalisieren, und wobei Auskunft über den Blüte- und/oder Fruchtbildungszustand der Gewächse gegeben wird, wenn sich das Telefon in der Nähe dieser Gewächse befindet, um eine Geolokalisierung der Gewächse, über deren Zustand Auskunft gegeben wird, zu gestatten.

10. Verfahren nach einem der Ansprüche 8 und 9, wobei mindestens ein Foto der Gewächse mit dem Mobiltelefon oder dem Fotoapparat aufgenommen wird und wobei dieses Foto automatisch analysiert wird, um daraus mindestens eine Information über den Blüte- und/oder Fruchtbildungszustand abzuleiten, wobei das Foto vorzugsweise geolokalisiert ist.

11. Verfahren nach einem der vorhergehenden Ansprüche, wobei die Beschattung nach der vollen Blüte ausgelöst wird.

12. Verfahren nach einem der vorhergehenden Ansprüche, wobei ein agronomisches Modell zum Pflanzenwachstum verwendet wird, um den Moment der Anwendung der Beschattung zu bestimmen.

13. Verfahren nach einem der vorhergehenden Ansprüche, wobei die Photovoltaikmodule (C) auf einem Tragwerk (P) in einer bezogen auf die Gewächse (A) angemessenen Höhe positioniert sind, um eine Beschattung derselben mit einer maximalen Reichweite zu gestatten, wobei die Höhe (h) des Tragwerks (P) insbesondere einstellbar ist.

14. Verfahren nach einem der vorhergehenden Ansprüche, wobei die Gewächse (A) aus Obstbäumen, insbesondere Kern- und Steinobstbäumen, besonders Apfelbäumen, Birnbäumen, Pflaumenbäumen, Aprikosenbäumen, Feigenbäumen, Strahlengriffeln, Kirschbäumen und Pfirsichbäumen, ausgewählt werden.

15. Verfahren zum Anbau von Früchten unter ausrichtbaren Photovoltaikmodulen, wobei die Anzahl von Früchten oder Blüten an den Gewächsen eine vordefinierte Grenze überschreitet, die der gewünschten Qualität der Früchte abträglich ist, wobei eine Ausdünnung durch die Umsetzung des Ausdünnungsverfahrens nach einem der Ansprüche 1 bis 14 durchgeführt wird.

## Claims

1. Method for thinning fruit (F) and/or flowers belonging to plants (A), **characterized in that** the plants (A) are located beneath orientable photovoltaic sensors (C), with the shade from the sun cast onto the plants being adjusted by changing the orientation of the sensors, in which method, by virtue of the orientation of the sensors, the plants are kept in the shade for a sufficient duration to induce thinning by shading said plants from the sun.

2. Method according to the preceding claim, with the orientation of the photovoltaic sensors (C) being automatically computer-controlled in order to carry out the thinning action, notably at least based on data representing the number of fruit (F) and/or flowers present and/or to be removed and/or the flowering or fructification state.

3. Method according to either of the two preceding claims, with the shading applied to the plants (A) during thinning being regulated at least according to the variety of the plant, the meteorological conditions, the initial load of the plant and the production objectives, notably the size classes of the fruit (F), the yield and/or the quality of the fruit.

4. Method according to any one of the preceding claims, wherein the desired abscission is caused while attempting to achieve an optimum maximizing the production of electrical energy as much as possible with respect to a reference not in combination with the plants (A).

5. Method according to any one of the preceding claims, being carried out in addition to mechanical and/or chemical thinning.

6. Method according to any one of the preceding claims, with the photovoltaic sensors (C) being oriented during said duration so as to generate as much shade as possible on the plants (A) to be thinned.

7. Method according to any one of the preceding claims, with at least one camera (45) being used to acquire images of the plants (A), with an information processing unit automatically determining the appropriate time for applying shading based on these images.

8. Method according to any one of the preceding claims, with an application for a mobile telephone or a camera being used by an agricultural operator to notify control software of the flowering and/or fructification state of the plants.

9. Method according to Claim 8, wherein the application is configured to automatically geolocate the telephone or the camera, and wherein information is provided concerning the flowering and/or fructification state of the plants while the telephone is in the vicinity of these plants, so as to allow geolocation of the plants for which information is provided concerning the state thereof.

10. Method according to either of Claims 8 and 9, wherein at least one photograph of the plants is taken with the mobile telephone or the camera, and wherein this photograph is automatically analysed in order to deduce at least one item of information therefrom concerning the flowering and/or fructification state, with the photograph preferably being geolocated.

11. Method according to any one of the preceding claims, wherein the shading is triggered after full bloom.

12. Method according to any one of the preceding claims, with an agronomic plant growth model being used to determine when to apply the shading.

13. Method according to any one of the preceding claims, with the photovoltaic sensors (C) being positioned on a supporting structure (P) at a suitable height (h) with respect to the plants (A) so as to allow shading thereof at a maximum range, with the height (h) of the supporting structure (P) being notably adjustable.

14. Method according to any one of the preceding claims, with the plants (A) being selected from among fruit trees, notably fruit trees with seeds and cores, in particular apple trees, pear trees, plum trees, apricot trees, fig trees, actinidias, cherry trees and peach trees.

15. Method for cultivating fruit beneath orientable photovoltaic sensors, with the number of fruit or flowers on the plants exceeding a predefined limit detrimental to the desired quality for the fruit, wherein thinning is carried out by implementing the thinning method according to any one of Claims 1 to 14.
